# EUROPEAN PATENT SPECIFICATION

(11) **EP 4 024 594 B1**
(45) Date of publication and mention of the grant of the patent: **15.07.2026**
(21) Application number: 21780142.2
(22) Date of filing: 04.02.2021
(51) Int. Cl.: H01M 50/35, H01M 50/20

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 01.04.2020 KR 20200039759
(43) Date of publication of application: 06.07.2022
(73) Proprietor: LG ENERGY SOLUTION, LTD., Seoul 07335 (KR)
(72) Inventor: CHOI, Jonghwa, Daejeon 34122 (KR); SEONG, Junyeob, Daejeon 34122 (KR); PARK, Myungki, Daejeon 34122 (KR)
(74) Representative: Plasseraud IP
(86) International application number: PCT/KR2021/001484
(87) International publication number: WO 2021/201409

(56) References cited:
- WO-A1-2017/003168
- JP-A- 2016 134 335
- KR-A- 20100 081 942
- KR-A- 20120 009 592
- KR-A- 20180 113 416
- KR-A- 20190 122 474
- KR-A- 20190 124 022
- US-A1- 2019 097 192

## Description

### [TECHNICAL FIELD]

The present disclosure relates to a battery module and a battery pack including the same, and more particularly, to a battery module having enhanced stability, and a battery pack including the same.

### [BACKGROUND ART]

As technology development and demands for mobile devices increase, the demand for batteries as energy sources is rapidly increasing. Accordingly, many researches of the battery capable of meeting a variety of needs are emerging.

A secondary battery has attracted considerable attention as an energy source for powerdriven devices, such as an electric bicycle, an electric vehicle, and a hybrid electric vehicle, as well as an energy source for mobile devices, such as a mobile phone, a digital camera, and a laptop computer.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series/parallel.

Meanwhile, when a plurality of battery cells are connected in series or in parallel to configure a battery pack, it is common to configure a battery module composed of at least one battery cell first, and then configure a battery pack by using at least one of the battery modules and adding other components. Since the battery cells constituting these middle or large-sized battery modules are composed of chargeable/dischargeable secondary batteries, such a high-output and large-capacity secondary battery generates a large amount of heat in a charging and discharging process.

The battery module includes a battery cell stack in which a plurality of battery cells are stacked, a frame for housing the battery cell stack, and end plates for covering the front and rear surfaces of the battery cell stack. Examples of a battery module can be found for instance in US 2019/097192 A1, WO 2017/003168 A1 or KR 2019 0122474 A.

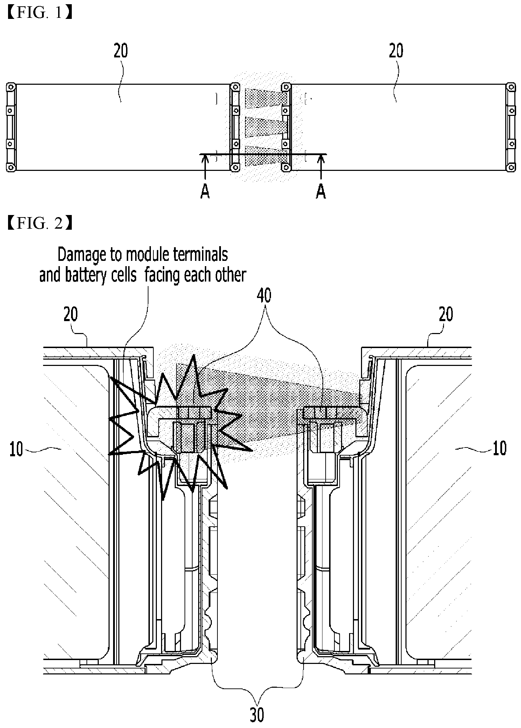

FIG. 1 is a view illustrating the appearance of a battery module mounted on a conventional battery pack at the time of ignition. FIG. 2 illustrates section A-A of FIG. 1 and is a view illustrating the appearance of a flame affecting adjacent battery modules when a battery module mounted on a conventional battery pack ignites.

Referring to FIGS. 1 and 2, the conventional battery module includes a battery cell stack in which a plurality of battery cells 10 are stacked, a frame 20 for housing the battery cell stack, end plates 30 formed on the front and rear surfaces of the battery cell stack, terminal bus bar 40 formed so as to protrude to the outside of the end plates, and the like.

The frame 20 and the end plate 30 can be coupled so as to be sealed by welding. When the frame 20 and the end plate 30 for housing the battery cell stack are coupled in this way, the internal pressure of the battery cells 10 increases during overcharge of the battery module. Thus, when a limit value of the welding strength of the battery cell is exceeded, high-temperature heat, gas, and flame generated in the battery cells 10 can be discharged to the outside of the battery cell 10.

At this time, the high-temperature heat, gas and flame may be discharged through the openings formed in the end plates 30. However, in a battery pack structure in which a plurality of battery modules are arranged so that the end plates 30 face each other, it may affect a battery module located adjacent to battery modules that eject high-temperature heat, gas and flame. Thereby, the terminal busbar 40 formed on the end plates 30 of the adjacent battery modules may be damaged, and high-temperature heat, gas, and flame may enter the inside of the battery module via the openings formed in the end plates 30 of the adj acent battery modules to damage the plurality of battery cells 10.

### [DETAILED DESCRIPTION OF THE INVENTION]

### [Technical Problem]

It is an object of the present disclosure to provide a battery module capable of dispersing high-temperature heat and flame discharged when an ignition phenomenon occurs in the battery module, and a battery pack including the same.

### [Technical Solution]

The present disclosure provides a battery module as defined by the independent claim 1 and a battery pack as defined by the independent claim 10. Preferred embodiments are defined in the appended dependent claims.

The battery module comprising: a module frame into which battery cell stack, in which a plurality of battery cells are stacked, is inserted; end plates for covering front and rear surfaces of the battery cell stack and coupled to the module frame; and a cell terrace assembly located between the battery cell stack and the end plates, wherein a venting part is formed in a side surface part of the module frame, and the venting part is formed to be adjacent to the cell terrace assembly rather than to the battery cell stack.

The venting part may be formed in an area in which the cell terrace assembly is formed.

The venting part may be located at both ends of the side surface part of the module frame.

A terminal busbar opening and a connector opening may be formed on the end plate, and the venting part may disperse and discharge gas and heat emitted from the terminal busbar opening and the connector opening.

The venting part may have a hole structure formed in the side surface part of the module frame.

The hole structure may obliquely pass through the side surface part of the module frame.

The end plates may include a first end plate and a second end plate, and the hole structure has an oblique direction towards an end plate located farther away from the venting part, among the first end plate and the second end plate.

The venting part may include an inflow port that is formed in the side surface part of the module frame to correspond to a stack surface of the battery cell stack, and a discharge port for discharging gas flown in through the inflow port, and the discharge port may be formed in a direction that is perpendicular to the inflow port.

The venting part may further include a connection part that is formed between the inflow port and the discharge port to guide the gas flown into the inflow port in a direction in which the discharge port is located, and the connection part has a structure which is inclined with respect to the side surface part of the module frame.

The end plates may include a first end plate and a second end plate, and the discharge port is formed toward an end plate located farther away from the venting part, among the first end plate and the second end plate.

The battery pack comprising: two or more of the battery modules, wherein among the battery modules, a first battery module and a second battery module each have an opening formed at one side facing each other.

A venting part of the first battery module may be formed so as to discharge gas in a direction opposite to a direction in which the second battery module is located.

### [ADVANTAGEOUS EFFECTS]

According to the embodiments of the present disclosure, a venting part can be formed on the side surface part of the module frame in a portion adjacent to the cell terrace assembly rather than the battery cell stack, thereby dispersing high-temperature heat, gas, and flame generated at the time of ignition of the battery module and so minimizing a damage to the terminal busbars of the battery module and the portions of plural battery cells facing the battery module.

The effects of the present disclosure are not limited to the effects mentioned above and additional other effects not described above will be clearly understood from the description of the appended claims by those skilled in the art.

### [BRIEF DESCRIPTION OF THE DRAWINGS]

FIG. 1 is a view illustrating the appearance of a battery module mounted on a conventional battery pack at the time of ignition;
FIG. 2 illustrates a section taken along line A-A in FIG. 1 and is a view illustrating the appearance of a flame affecting adjacent battery modules when a battery module mounted on a conventional battery pack ignites;
FIG. 3 is an exploded perspective view illustrating a battery module according to an embodiment of the present disclosure;
FIG. 4 is a perspective view illustrating the battery cell included in the battery module of FIG. 3;
FIG. 5 is a perspective view illustrating a state in which the battery module of FIG. 3 is coupled;
FIG. 6 is a plan view taken along the cutting line B-B in FIG. 5;
FIG. 7 is a perspective view illustrating a battery module according to another embodiment of the present disclosure;
FIG. 8 is a plan view taken along the cutting line C-C in FIG. 7;
FIG. 9 is a perspective view illustrating a battery module according to another embodiment of the present disclosure; and
FIG. 10 is a plan view illustrating a battery pack 1000 according to an embodiment of the present disclosure when viewed from above.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the figures, the size and thickness of each element are arbitrarily illustrated for convenience of description, and the present disclosure is not necessarily limited to those illustrated in the figures. In the figures, the thickness of layers, regions, etc. are exaggerated for clarity. In the figures, for convenience of description, thicknesses of some layers and regions are shown to be exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the specification, when a portion is referred to as "including" a certain component, it means that the portion can further include other components, without excluding the other components, unless otherwise stated.

Further, throughout the specification, the phrase "in a plan view" means when a target object is viewed from the above, and the phrase "in a cross-section view" means when a cross-section taken by vertically cutting a target portion is viewed cut from the side.

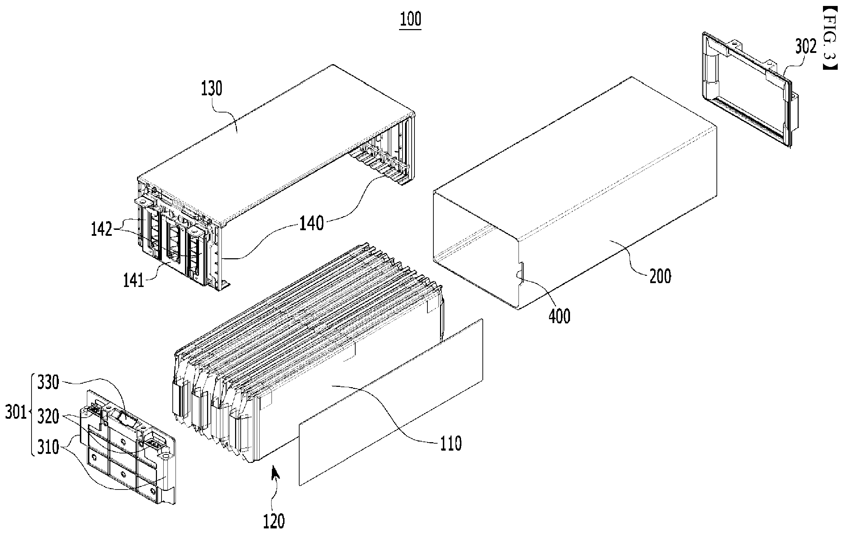

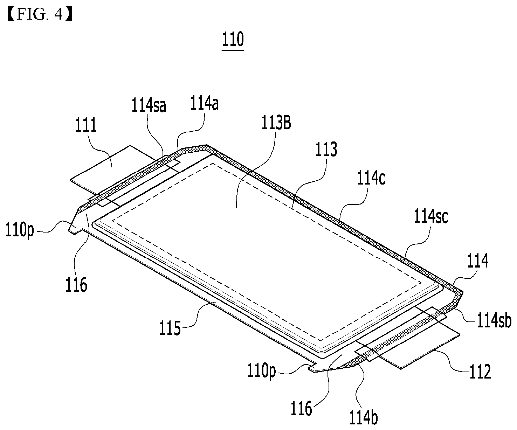

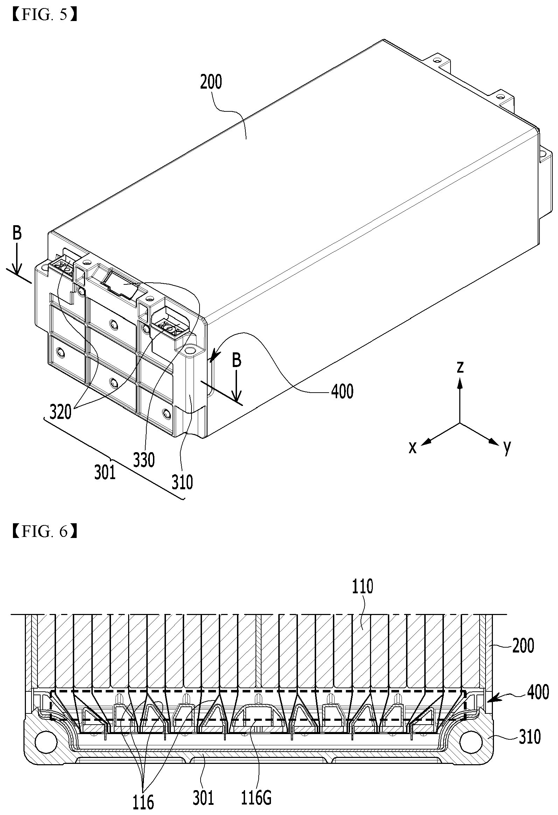

FIG. 3 is an exploded perspective view illustrating a battery module according to an embodiment of the present disclosure. FIG. 4 is a perspective view illustrating the battery cell included in the battery module of FIG. 3. FIG. 5 is a perspective view illustrating a state in which the battery module of FIG. 3 is coupled. FIG. 6 is a plan view taken along the cutting line B-B in FIG. 5. FIG. 6 is a plan view taken along an XY plane of FIG. 5, when viewed in direction B.

Referring to FIGS. 3 to 5, the battery module 100 according to an embodiment of the present disclosure includes a battery cell stack 120 in which a plurality of the battery cells 110 are stacked, and a module frame 200 for housing the battery cell stack 120. A venting part 400 is formed in a side surface part of the module frame 200. The venting part 400 as used herein means a part for discharging heat or gas inside the battery module 100.

Hereinafter, a configuration of one battery cell 110 will be described with reference to FIG. 4.

Referring to FIG. 4, the battery cell 110 may be a secondary battery, and may be configured of a pouch type secondary battery. The battery cell 110 may include an electrode assembly 113, a cell case 114, and electrode leads 111 and 112 protruded from the electrode assembly 113.

The electrode assembly 113 may be composed of a positive electrode plate, a negative electrode plate, a separator, and the like. The cell case 114 is for packaging the electrode assembly 113 and may be formed of a laminate sheet including a resin layer and a metal layer. The cell case 114 may include a case main body 113B and a cell terrace 116.

The case main body 113B may house the electrode assembly 113. To achieve this, a housing space capable of housing the electrode assembly 113 is provided in the case main body 113B. The cell terrace 116 may extend from the case main body 113B and may be sealed so that the electrode assembly 113 can be sealed.

The electrode leads 111 and 112 may be electrically connected to the electrode assembly 113. The electrode leads 111 and 112 may be provided with a pair including a negative electrode lead 111 and a positive electrode lead 112. A part of the pair of the electrode leads 111 and 112 may be protruded from a front side (+ X-axis direction) and a rear side (- X-axis direction) of the cell case 114 to the outside of the cell terrace 116, respectively.

Meanwhile, the battery cell 110 may be manufactured by sealing both ends 114a and 114b of the cell case 114 and one side part 114c for connecting these ends in a state where the electrode assembly 113 is housed in the cell case 114. That is, the battery cell 110 according to the embodiment of the present disclosure includes a total of three sealing parts 114sa, 114sb, and 114sc, the sealing parts 114sa, 114sb, and 114sc have a structure capable of being sealed by a method such as heat fusion, and the remaining other side part may be composed of a connection part 115.

Further, the connection part 115 may be extended long along one periphery of the battery cell 110, and a protrusion 110p of the battery cell 110, which is called as bat-ear, may be formed at an end of the connection part 115. Further, the cell case 114 may be sealed at an interval between the protruded electrode leads 111 and 112.

The configuration of the battery cell 110 as described above is one example, and the shape of the battery cell 110 for constituting the battery cell stack may be variously modified.

The battery cells 110 may be formed of a plurality of cells, and the plurality of the battery cells 110 may be stacked to be electrically connected to each other, thereby forming the battery cell stack 120. An upper plate 130 may be located on an upper side of the battery cell stack 120, and busbar frames 140 may be located on a front surface and a rear surface of the battery cell stack 120, in directions in which the electrode leads 111 and 112 are protruded, respectively. The battery cell stack 120, the upper plate 130 and the busbar frame 140 may be housed together in the module frame 200.

A thermally conductive resin can be injected between the battery cell stack 120 and a lower surface of the module frame 200, and a thermally conductive resin layer (not illustrated) can be formed between the battery cell stack 120 and the lower surface of the module frame 200, through the injected thermally conductive resin. Through the module frame 200, the battery cell stack 120 housed in the interior the module frame 200 and components connected thereto can be protected from a physical impact of the outside.

The busbar frames 140 are located on the front surface and the rear surface of the battery cell stack 120, respectively, to guide connection of the battery cell stack 120 and an external device simultaneously while covering the battery cell stack 120. In detail, a busbar 141 and a terminal busbar 142 can be mounted on the busbar frame 140. The electrode leads 111 and 112 of the battery cell 110 pass through a slit formed in the busbar frame 140 and then are curved so that they can be joined to the busbar 141 and the terminal busbars 142. The battery cells 110 constituting the battery cell stack 120 may be connected in series or in parallel through the busbar 141, and the external device or circuit and the battery cells 110 may be connected through the terminal busbars 142 exposed to the outside of the battery module 100. Further, a connector (not illustrated) may be mounted on the busbar frame 140, and a temperature or voltage data of the battery cell 110 measured through a sensing assembly (not illustrated) can be transmitted to an external BMS (battery management system) or the like through a connector (not illustrated).

End plates 301 and 302 are formed so as to cover the front surface and the rear surface of the battery cell stack 120. A mounting part 310 for coupling to a pack frame is formed in each of the end plates 301 and 302. In detail, a first end plate 301 and a second end plate 302 may be located on the front surface and the rear surface of the battery cell stack 120, respectively. The end plates 301 and 302 can protect the busbar frame 140 and plural electronic components connected thereto from external impact and need to have a predetermined strength to achieve this and may include a metal such as aluminum.

A terminal busbars opening 320 and a connector opening 330 for allowing the terminal busbars 142 and the connector (not illustrated) mounted on the busbar frame 140 to be connected with the outside are formed in the end plates 301 and 302, and gas or heat generated from the battery cell 110 can be discharged to the outside of the battery module 100 through the openings 320 and 330. The end plates 301 and 302 and the module frame 200 are coupled by welding, and the plurality of battery cells 110 located inside the module frame 200 and the end plates 301 and 302 can be interrupted from being connected with the outside, through the coupling structure of the end plates 301 and 302 and the module frame 200 sealed by welding except for the above-mentioned openings 320 and 330.

The conventional battery module can discharge high-temperature heat, gas or flame, which are generated from the battery cells, through openings, as described above. However, in a battery pack structure in which the plurality of battery module are disposed such that the end plates face each other, high-temperature heat, gas and flame, which are discharged from the battery module, may damage adjacent battery modules.

Thus, the venting part 400 can be formed in the side surface part of the module frame 200 according to the embodiment of the present disclosure to disperse heat, gas, flame and the like, which are discharged through the openings 320 and 330. The venting part 400 may have a hole structure which is formed in a side surface part of the module frame 200. The hole structure according to the embodiment of the present disclosure may have a shape in which an end of a side surface part of the module frame 200 is partially cut, as illustrated in FIGS 3 and 5.

Through the venting part 400, the discharge path of the interior of the battery module 100 can be diversified, thereby preventing a phenomenon in which the discharge is concentrated to only a part of the battery module 100 at the time of ignition, and dispersing the discharge of high-temperature heat, gas and flame.

Further, referring to FIGS. 5, and 6, the venting part 400 according to the embodiment of the present disclosure is formed at a location corresponding to the cell terrace 116 of the battery cell 110 is located. In the battery cell 110, a large amount of heat is generated from the electrode leads 111 and 112, and the cell terraces 116 adjacent thereto. While the cell terraces 116 are unsealed due to a change in pressure inside the battery module 100, high- temperature heat, gas and flame can be discharged. In this case, the venting part 400 according to this embodiment can be formed at a location corresponding to the cell terrace 116 to immediately discharge high-temperature heat, gas, and flame to the outside of the battery module 100. In detail, as the battery cells 110 constituting the battery cell stack may be formed of a plurality of cells, the cell terraces 116 may be formed of a plurality of terraces to form a cell terrace assembly 116G. The venting part 400 may be formed in the side surface part of the module frame 200, which corresponds to the cell terrace assembly 116G. The venting part 400 according to this embodiment may be formed to be adjacent to the cell terrace assembly 116G rather than to the battery cell stack 120. As an example, the venting part 400 may be formed at the location corresponding to the cell terrace assembly 116G.

Although not illustrated, the venting part may be additionally formed to be adjacent to the second end plate 302. At this time, the additionally formed venting part may be formed so as to discharge gas in a direction of the first end plate 301.

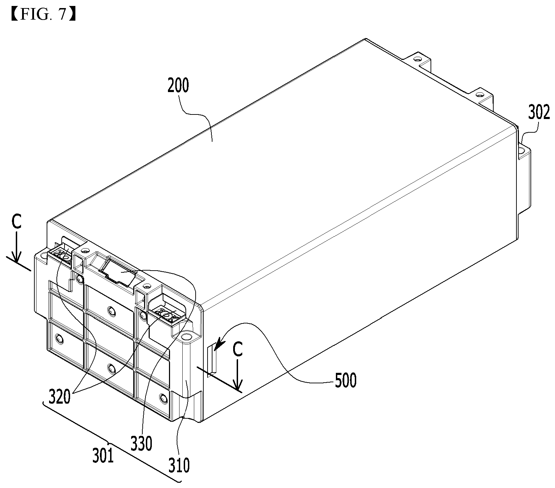

Hereinafter, a venting part according to modified embodiments of the present disclosure will be described with reference to FIGS. 7 to 9.

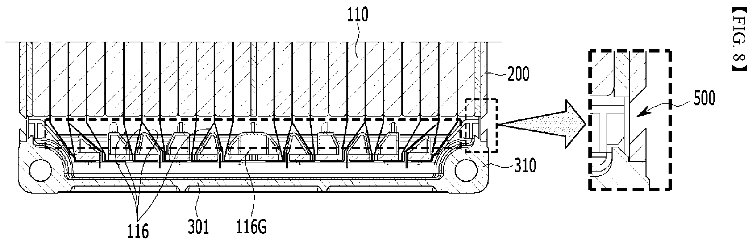

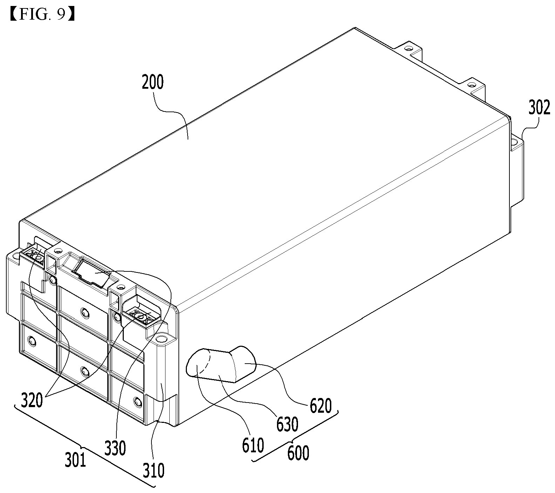

FIG. 7 is a perspective view illustrating a battery module according to another embodiment of the present disclosure. FIG. 8 is a plan view taken along the cutting line C-C in FIG. 7. FIG. 8 is a plan view taken along an XY plane of FIG. 7, when viewed in a direction C. FIG. 9 is a perspective view illustrating a battery module according to another embodiment of the present disclosure.

Referring to FIGS. 7 and 9, venting parts 500 and 600 according to the present embodiments can be formed so as to discharge gas toward an end plate located farther away from the venting parts 500 and 600, among a first end plate 301 and a second end plate 302. As illustrated in FIGS. 7 and 9, the venting parts 500 and 600 located closer to the first end plate 301 can be formed so as to discharge gas in a direction of the second end plate 302 located farther away therefrom. Although not illustrated, the venting part may be additionally formed to be adjacent to the second end plate 302. At this time, the additionally formed venting part can be formed so as to discharge gas in a direction of the first end plate 301.

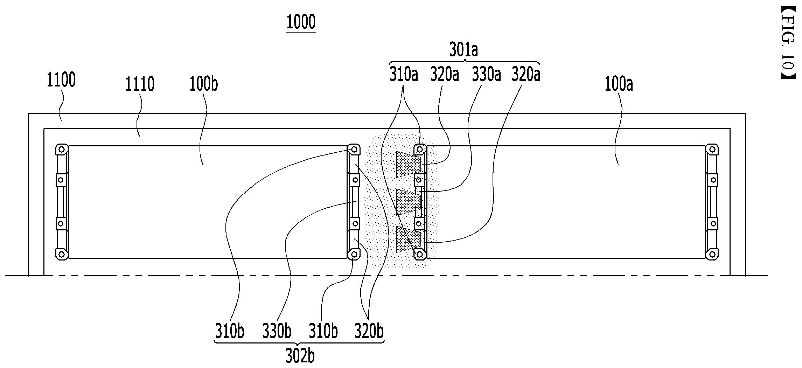

The venting parts 500 and 600 are formed at the locations corresponding to the cell terraces 116, but are closer to the first end plate 301 than to the second end plate 302 located on an opposite side part relative to the battery cell stack 120, so that when gas is discharged in a direction of the first end plate 301, high-temperature heat, gas, and flame are discharged to another battery module adjacent to the first end plate 301 to damage the another battery module. In order to prevent this, the venting part 500 is preferably formed so as to discharge gas only in a direction of the second end plate 302. This will be described below in FIG. 10 again.

Referring to FIGS. 7 and 8, the venting part 500 according to the embodiment of the present disclosure has a hole structure which is formed in a side surface part of the module frame 200, and, unlike the venting part 400 according to the embodiment described in FIG. 5, the hole may be formed to be spaced apart from an end of the side surface part of the module frame 200 by a fixed interval. Moreover, the venting part 500 according to the embodiment of the present disclosure may have a hole structure for obliquely penetrate the side surface part of the module frame 200. Here, the hole structure has an oblique direction towards an end plate located farther away from the venting part 500, among the first end plate 301 and the second end plate 302.

In detail, an inner inflow port of the obliquely penetrated venting part 500 may be formed to be closer to the first end plate 301 than an outer discharge port, and the outer discharge port may be formed to be closer to the second end plate 302 than the inner inflow port.

Through the structure as described above, directionality can be naturally given to heat or gas discharged through the venting part 500. That is, the venting part 500 can guide so as to discharge gas in a direction of the second end plate 302 located farther away therefrom, thereby preventing a damage of another battery module that is adjacent to the first end plate 301 through this.

Further, the venting part 500 according to the embodiment of the present disclosure has the advantages in that it has a penetrated hole structure, does not require a separate additional space, and can simply give the directionality of the discharged gas only by penetrating the module frame 200.

Next, referring to FIG. 9, the venting part 600 may include an inflow port 610 that is formed in a side surface part of the module frame 200 to face one surface of the battery cell along a stacking direction of a battery cell stack, a discharge port 620 for discharging gas flown in through the inflow port 610, and a connection part 630 for connecting the inflow port 610 and the discharge port 620.

The discharge port 620 may be formed in a direction that is perpendicular to the inflow port 610. Further, the connection part 630 may have a shape which is protruded from the side surface part of the module frame 200, and may be formed in an inclined manner.

Based on the structure as described above, the venting part 600 according to the embodiment of the present disclosure can more securely guide heat or gas of the interior of the battery module in a direction of the second end plate 302. That is, it has the advantage that the directionality of heat or gas can be given more securely. Further, the connection part 630 can act as a kind of a cover to interrupt external spatters from entering the interior of the battery module.

Meanwhile, the number of the above-mentioned venting parts 400, 500, and 600 according to the embodiment of the present disclosure is not specially limited, and may be formed of one or a plurality of the venting parts. However, when the venting parts 400, 500, and 600 are formed of the plurality of venting parts, they may be arranged along the direction that is perpendicular to the side surface part of the module frame 200 so as to correspond to the locations of the cell terraces 116 constituting the battery cell stack 120. Here, the direction that is perpendicular to the side surface part of the module frame 200 means a direction that is parallel to Z-axis in FIG. 5.

Referring to FIG. 3 again, the module frame 200 according to the present disclosure may be a structure of a mono frame or a structure in which an upper cover is coupled to a U-shaped frame. First, the mono frame may be in the form of a metal plate, of which an upper surface, a lower surface, and both side surfaces are integrated, and may be manufactured through extrusion molding. Next, in a case of structure in which the upper cover is coupled to the U-shaped frame, it may be formed by coupling the upper cover onto an upper side of the U-shaped frame which is a metal plate in which a lower surface, and both side surfaces are integrated, and may also be manufactured by press molding.

As illustrated in FIGS. 5 or 7, the venting parts 400 and 500 of a hole structure can be applied to both of the mono frame manufactured by the extrusion molding or the U-shaped frame manufactured by the press molding. Meanwhile, as illustrated in FIG. 9, the venting part 600 of a protruded structure is easier to implement in the U-shaped frame manufactured by the press molding than in the mono frame manufactured by the extrusion molding. However, in forming the venting part 600 of the protruded structure, it may be formed by forming a hole penetrated in a side surface part of the module frame 200 and joining the connection part 630 and the discharge port 620 to the side surface part of the module frame 200. In this case, the venting part 600 can be applied even to the mono frame manufactured by extrusion molding.

FIG. 10 is a plan view illustrating a battery pack 1000 according to an embodiment of the present disclosure when viewed from above.

Referring to FIG. 10, the battery pack 1000 according to an embodiment of the present disclosure may include two or more of the battery modules 100a and 100b as described above.

The battery modules 100a and 100b may be housed in a pack frame 1100 and may be mounted together with various control and protection systems such as a BMS (battery management system), a cooling system, and the like.

A first battery module 100a and a second battery module 100b each may have openings 320a, 330a, 320b, and 330b formed on one side facing each other.

In detail, a first end plate 301a of the first battery module 100a and a second end plate 302b of the second battery module 100b may face each other. At this time, a terminal busbar opening 320a and a connector opening 330a may be formed in the first end plate 301a, and a terminal busbar opening 320b and a connector opening 330b may be formed in the second end plate 302b.

The battery modules 100a and 100b according to the embodiment of the present disclosure can provide the above-mentioned venting part in a side surface part of the module frame, thereby reducing heat, gas, flame, and the like discharged through the openings 320a, 330a, 320b, and 330b.

Further, the venting parts 500 and 600 illustrated in FIGS. 7 and 9 may be provided in the first battery module 100a, and accordingly, can guide so as to discharge heat, gas, flame, and the like in a direction that is opposite to a direction in which the second battery module 100b is located. That is, a damage that may applied to the second battery module 100b can be minimized.

The battery modules 100a and 100b according to the embodiment of the present disclosure may be spaced apart from a side surface part 1110 of the pack frame 1100. Although not illustrated, the battery module 100a and 100b may have a support member formed between the side surface part of the module frame 200 and the pack frame 1100. The support member can prevent the battery modules 100a and 100b from moving in the interior of the pack frame 1100.

The battery module and the battery pack according to this embodiment as described above can be applied to various devices. These devices may be applied to transportation means such as an electric bicycle, an electric vehicle, a hybrid vehicle, but the present disclosure is not limited thereto and can be applied to various devices that can use the module.

### [Description of Reference Numerals]

116: cell terrace
116G: cell terrace assembly
200: module frame
301, 302: end plate
400, 500, 600: venting part

## Claims

1. A battery module (100) comprising:
a battery cell stack (120) having a plurality of stacked battery cells (110), wherein each battery cell comprises an electrode assembly (113), a cell case (114), and electrode leads (111, 112), wherein the cell case (114) include a case main body (113B) that houses the electrode assembly and a cell terrace (116) that extends from the case main body (113B) and is configured to seal the electrode assembly (113), wherein a portion of the electrode leads protrudes from the cell case (114) to the outside of the cell terrace;
a module frame (200) into which the battery cell stack is inserted;
end plates (301, 302) formed to cover a front and a rear surface of the battery cell stack and coupled to the module frame, wherein the module frame has a side surface part that extends between the end plates; and
a cell terrace assembly (116G) formed by terraces of the stacked battery cells and located between battery cells main bodies of the battery cell stack and the end plates,
wherein a venting part (400) is formed adjacent to the cell terrace assembly in the side surface part of the module frame, and the venting part is formed to be adjacent to the cell terrace assembly rather than to the battery cell stack, wherein the venting part is located at both ends of the side surface part of the module frame.

2. The battery module according to claim 1,
wherein the venting part is formed in an area in which the cell terrace assembly is formed.

3. The battery module according to claim 1,
wherein a terminal busbar opening and a connector opening are formed on the end plates, and the venting part is configured to disperse and discharge gas and heat emitted from the terminal busbar opening and the connector opening.

4. The battery module according to claim 1,
wherein the venting part has a hole structure formed in the side surface part of the module frame.

5. The battery module according to claim 4,
wherein the hole structure obliquely passes through the side surface part of the module frame.

6. The battery module according to claim 5,
wherein the end plates comprises a first end plate and a second end plate, and the hole structure has an oblique direction towards an end plate located farther away from the venting part, among the first end plate and the second end plate.

7. The battery module according to claim 1,
wherein the venting part comprises,
an inflow port (610) that is formed in the side surface part of the module frame to correspond to a stack surface of the battery cell stack, and
a discharge port (620) for discharging gas flown in through the inflow port, and
the discharge port is formed in a direction that is perpendicular to the inflow port.

8. The battery module according to claim 7,
wherein the venting part further comprises,
a connection part (630) that is formed between the inflow port and the discharge port to guide the gas flown into the inflow port in a direction in which the discharge port is located, and
the connection part has a structure which is inclined with respect to the side surface part of the module frame.

9. The battery module according to claim 7,
wherein the end plates comprises a first end plate and a second end plate, and
the discharge port is formed toward an end plate located farther away from the venting part, among the first end plate and the second end plate.

10. A battery pack (1000) comprising:
two or more of the battery modules (100a, 100b) as set forth in claim 1,
wherein among the battery modules, a first battery module (100a) and a second battery module (100b) of the two or more of the battery modules each has an opening (320a, 330a, 320b, 330b) formed at one side facing each other.

11. The battery pack according to claim 10ends,
wherein a venting part of the first battery module is formed so as to discharge gas in a direction opposite to a direction in which the second battery module is located.

## Patentansprüche

1. Batteriemodul (100), umfassend:
einen Batteriezellenstapel (120) mit einer Vielzahl von gestapelten Batteriezellen (110), wobei jede Batteriezelle eine Elektrodenanordnung (113), ein Zellengehäuse (114) und Elektrodenableitungen (111, 112) umfasst, wobei das Zellengehäuse (114) einen Gehäusehauptkörper (113B), der die Elektrodenanordnung aufnimmt, und eine Zellenterrasse (116) umfasst, die sich von dem Gehäusehauptkörper (113B) erstreckt und konfiguriert ist, um die Elektrodenanordnung (113) abzudichten, wobei ein Abschnitt der Elektrodenableitungen von dem Zellengehäuse (114) zur Außenseite der Zellenterrasse vorsteht;
einen Modulrahmen (200), in den der Batteriezellenstapel eingesetzt ist;
Endplatten (301, 302), die gebildet sind, um eine vordere und eine hintere Oberfläche des Batteriezellenstapels zu bedecken, und mit dem Modulrahmen gekoppelt sind, wobei der Modulrahmen einen Seitenflächenteil aufweist, der sich zwischen den Endplatten erstreckt; und
eine Zellenterrassenanordnung (116G), die durch Terrassen der gestapelten Batteriezellen gebildet ist und sich zwischen Batteriezellen-Hauptkörpern des Batteriezellenstapels und den Endplatten befindet,
wobei ein Entlüftungsteil (400) angrenzend an die Zellenterrassenanordnung in dem Seitenflächenteil des Modulrahmens gebildet ist, und der Entlüftungsteil gebildet ist, um eher an die Zellenterrassenanordnung als an den Batteriezellenstapel anzugrenzen, wobei sich der Entlüftungsteil an beiden Enden des Seitenflächenteils des Modulrahmens befindet.

2. Batteriemodul nach Anspruch 1,
wobei der Entlüftungsteil in einem Bereich gebildet ist, in dem die Zellenterrassenanordnung gebildet ist.

3. Batteriemodul nach Anspruch 1,
wobei eine Anschluss-Sammelschienenöffnung und eine Verbinderöffnung an den Endplatten gebildet sind, und der Entlüftungsteil konfiguriert ist, um Gas und Wärme zu verteilen und abzuführen, die von der Anschluss-Sammelschienenöffnung und der Verbinderöffnung emittiert werden.

4. Das Batteriemodul nach Anspruch 1,
wobei der Entlüftungsteil eine Lochstruktur aufweist, die in dem Seitenflächenteil des Modulrahmens gebildet ist.

5. Batteriemodul nach Anspruch 4,
wobei die Lochstruktur schräg durch den Seitenflächenteil des Modulrahmens verläuft.

6. Batteriemodul nach Anspruch 5,
wobei die Endplatten eine erste Endplatte und eine zweite Endplatte umfassen, und die Lochstruktur eine schräge Richtung zu einer Endplatte aufweist, die sich von dem Entlüftungsteil weiter entfernt befindet, unter der ersten Endplatte und der zweiten Endplatte.

7. Batteriemodul nach Anspruch 1,
wobei der Entlüftungsteil umfasst,
eine Einströmöffnung (610), die in dem Seitenflächenteil des Modulrahmens gebildet ist, um einer Stapelfläche des Batteriezellenstapels zu entsprechen, und
eine Auslassöffnung (620) zum Abführen von Gas, das durch die Einströmöffnung eingeströmt ist, und
die Auslassöffnung in einer Richtung gebildet ist, die senkrecht zu der Einströmöffnung ist.

8. Batteriemodul nach Anspruch 7,
wobei der Entlüftungsteil ferner umfasst,
ein Verbindungsteil (630), das zwischen der Einströmöffnung und der Auslassöffnung gebildet ist, um das in die Einströmöffnung eingeströmte Gas in eine Richtung zu leiten, in der sich die Auslassöffnung befindet, und
das Verbindungsteil eine Struktur aufweist, die in Bezug auf den Seitenflächenteil des Modulrahmens geneigt ist.

9. Batteriemodul nach Anspruch 7,
wobei die Endplatten eine erste Endplatte und eine zweite Endplatte umfassen, und
die Auslassöffnung zu einer Endplatte hin gebildet ist, die sich von dem Entlüftungsteil weiter entfernt befindet, unter der ersten Endplatte und der zweiten Endplatte.

10. Batteriepack (1000), umfassend:
zwei oder mehr der Batteriemodule (100a, 100b) nach Anspruch 1,
wobei unter den Batteriemodulen ein erstes Batteriemodul (100a) und ein zweites Batteriemodul (100b) der zwei oder mehr Batteriemodule jeweils eine Öffnung (320a, 330a, 320b, 330b) aufweisen, die auf einer einander zugewandten Seite gebildet ist.

11. Batteriepack nach Anspruch 10,
wobei ein Entlüftungsteil des ersten Batteriemoduls so gebildet ist, dass er Gas in einer Richtung entlädt, die einer Richtung entgegengesetzt ist, in der sich das zweite Batteriemodul befindet.

## Revendications

1. Module de batterie (100) comprenant :
un empilement de cellules de batterie (120) ayant une pluralité de cellules de batterie empilées (110), dans lequel chaque cellule de batterie comprend un ensemble d'électrodes (113), un boîtier de cellule (114), et des sorties d'électrode (111, 112), dans lequel le boîtier de cellule (114) inclut un corps principal de boîtier (113B) qui loge l'ensemble d'électrodes et une terrasse de cellule (116) qui s'étend depuis le corps principal de boîtier (113B) et est configurée pour sceller l'ensemble d'électrodes (113), dans lequel une partie des sorties d'électrode fait saillie du boîtier de cellule (114) vers l'extérieur de la terrasse de cellule ;
un cadre de module (200) dans lequel l'empilement de cellules de batterie est inséré ;
des plaques d'extrémité (301, 302) formées pour couvrir une surface avant et une surface arrière de l'empilement de cellules de batterie et couplées au cadre de module, dans lequel le cadre de module a une partie de surface latérale qui s'étend entre les plaques d'extrémité ; et
un ensemble de terrasses de cellules (116G) formé par des terrasses des cellules de batterie empilées et situé entre des corps principaux de cellules de batterie de l'empilement de cellules de batterie et les plaques d'extrémité,
dans lequel une partie d'évent (400) est formée adjacente à l'ensemble de terrasses de cellules dans la partie de surface latérale du cadre de module, et la partie d'évent est formée pour être adjacente à l'ensemble de terrasses de cellules plutôt qu'à l'empilement de cellules de batterie, dans lequel la partie d'évent est située aux deux extrémités de la partie de surface latérale du cadre de module.

2. Module de batterie selon la revendication 1,
dans lequel la partie d'évent est formée dans une zone dans laquelle l'ensemble de terrasses de cellules est formé.

3. Module de batterie selon la revendication 1,
dans lequel une ouverture de barre omnibus de borne et une ouverture de connecteur sont formées sur les plaques d'extrémité, et la partie d'évent est configurée pour disperser et décharger le gaz et la chaleur émis depuis l'ouverture de barre omnibus de borne et l'ouverture de connecteur.

4. Module de batterie selon la revendication 1,
dans lequel la partie d'évent a une structure de trou formée dans la partie de surface latérale du cadre de module.

5. Module de batterie selon la revendication 4,
dans lequel la structure de trou passe obliquement à travers la partie de surface latérale du cadre de module.

6. Module de batterie selon la revendication 5,
dans lequel les plaques d'extrémité comprennent une première plaque d'extrémité et une seconde plaque d'extrémité, et la structure de trou a une direction oblique vers une plaque d'extrémité située plus loin de la partie d'évent, parmi la première plaque d'extrémité et la seconde plaque d'extrémité.

7. Module de batterie selon la revendication 1,
dans lequel la partie d'évent comprend,
un port de flux entrant (610) qui est formé dans la partie de surface latérale du cadre de module pour correspondre à une surface d'empilement de l'empilement de cellules de batterie, et
un port de décharge (620) pour décharger le gaz qui a circulé à travers le port de flux entrant, et
le port de décharge est formé dans une direction qui est perpendiculaire au port de flux entrant.

8. Module de batterie selon la revendication 7,
dans lequel la partie d'évent comprend en outre,
une partie de connexion (630) qui est formée entre le port de flux entrant et le port de décharge pour guider le gaz qui a circulé dans le port de flux entrant dans une direction dans laquelle le port de décharge est situé, et
la partie de connexion a une structure qui est inclinée par rapport à la partie de surface latérale du cadre de module.

9. Module de batterie selon la revendication 7,
dans lequel les plaques d'extrémité comprennent une première plaque d'extrémité et une seconde plaque d'extrémité, et
le port de décharge est formé vers une plaque d'extrémité située plus loin de la partie d'évent, parmi la première plaque d'extrémité et la seconde plaque d'extrémité.

10. Bloc-batterie (1000) comprenant :
deux modules de batterie (100a, 100b) ou plus tels que décrits dans la revendication 1,
dans lequel, parmi les modules de batterie, un premier module de batterie (100a) et un second module de batterie (100b) des deux modules de batterie ou plus ont chacun une ouverture (320a, 330a, 320b, 330b) formée sur un côté se faisant face.

11. Bloc-batterie selon la revendication 10,
dans lequel une partie d'évent du premier module de batterie est formée de manière à décharger du gaz dans une direction opposée à une direction dans laquelle le second module de batterie est situé.
